(19) Europäisches Patentamt
European Patent Office
Office européen des brevets

(11) **EP 3 845 302 A1**

(12) **EUROPEAN PATENT APPLICATION**
published in accordance with Art. 153(4) EPC

(43) Date of publication:
07.07.2021 Bulletin 2021/27

(21) Application number: 19853930.6

(22) Date of filing: 27.08.2019

(51) Int Cl.:
*B01F 15/00* (2006.01)   *B01F 7/04* (2006.01)
*B01F 7/08* (2006.01)   *B28C 1/02* (2006.01)
*H01M 4/139* (2010.01)

(86) International application number:
**PCT/JP2019/033525**

(87) International publication number:
**WO 2020/045435 (05.03.2020 Gazette 2020/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(30) Priority: 30.08.2018 JP 2018161508

(71) Applicant: **Kyocera Corporation
Kyoto-shi, Kyoto 612-8501 (JP)**

(72) Inventor: **YAMABE,Kunihiro
Kyoto-shi, Kyoto 612-8501 (JP)**

(74) Representative: **Viering, Jentschura & Partner
mbB
Patent- und Rechtsanwälte
Am Brauhaus 8
01099 Dresden (DE)**

(54) **ROTATION MEMBER, MEMBER FOR KNEADING MACHINE, KNEADING MACHINE USING SAME, BEARING, AND BEARING UNIT USING SAME**

(57)   A rotating member of the present disclosure mainly includes ceramics and includes a first through-hole into which a shaft is inserted and a second through-hole into which a key protruding from an outer peripheral surface of the shaft or a solid lubricant in direct or indirect sliding contact with the outer peripheral surface of the shaft is inserted. The second through-hole is a polygonal shape if viewed in an axial direction of the first through-hole and includes a notch part extending along the axial direction at at least one corner.

FIG. 1(a)

FIG. 1(b)

FIG. 1(c)

**Description**

TECHNICAL FIELD

The present invention relates to a kneading machine member to knead paste or the like used for toner materials, electronic component materials, and electrode materials for lithium-ion secondary batteries and a kneading machine using the same or a large bearing used in steel facilities, construction machinery, industrial machinery, or the like and a bearing unit using the same.

BACKGROUND

Conventionally, when producing an electrode paint or the like of a lithium-ion secondary battery, a twin-screw extruder in which two kneading shafts are arranged in parallel is used. In order to improve the quality of a lithium-ion secondary battery, for example, in Patent Document 1, a twin-screw kneading machine is suggested in which a kneading machine member (paddle, screw) in contact with raw materials is formed of ceramics to prevent contamination of metal impurities.

In addition, in Patent Document 2, a kneading extruder is suggested in which an edge part of a key inserted between a paddle made of ceramics and a rotating shaft mounted on the paddle is a curved surface and an edge part of a key groove formed in the paddle is a curved surface corresponding to the edge part of the key.

Moreover, a bearing with high wear resistance, friction vibration suppression function, and impact resistance is required, and in Patent Document 3, a bearing is suggested in which a friction body having a lubricating effect is disposed in engaging grooves provided at equal intervals along the circumferential direction on the inner peripheral surface side of an outer ring supporting a rotating shaft.

RELATED ART DOCUMENTS

PATENT DOCUMENTS

Patent Document 1: Japanese Unexamined Patent Publication No. 2012-129126
Patent Document 2: Japanese Unexamined Utility Model Publication No. H5-78504
Patent Document 3: Japanese Unexamined Patent Publication No. H11- 153138

SUMMARY

A rotating member of the present invention mainly includes ceramics and includes a first through-hole into which a shaft is inserted and a second through-hole into which a key protruding from an outer peripheral surface of the shaft or a solid lubricant in direct or indirect sliding contact with the outer peripheral surface of the shaft is inserted. The second through-hole is a polygonal shape if viewed in an axial direction of the first through-hole and includes a notch part extending along the axial direction at at least one corner.

A kneading machine member of the present invention is composed of the above rotating member.

A kneading machine of the present invention includes the above kneading machine member, a shaft inserted into the first through-hole, and a key protruding from the outer peripheral surface of the shaft and inserted into the second through-hole.

A first bearing of the present invention is composed of the above rotating member.

A second bearing of the present invention includes an outer ring which is composed of the above rotating member and an inner ring which is located in the first through-hole, is composed of an annular body coaxial with the first through-hole, and is rotatable with respect to the outer ring.

A bearing unit of the present invention includes the above first bearing, a shaft inserted into the first through-hole, and a solid lubricant inserted into the second through-hole and sliding contact with the shaft.

A bearing unit of the present invention includes the above second bearing, a shaft inserted into the inner ring, and a solid lubricant inserted into the second through-hole and sliding contact with the inner ring.

BRIEF DESCRIPTION OF THE DRAWINGS

Fig. 1 shows an example of a kneading machine member of the present disclosure, where (a) is a front view, (b) is a perspective view, and(c) is a perspective view showing a state in which a shaft is inserted into the kneading machine member.

Fig. 2 shows another example of a kneading machine member of the present disclosure, where (a) is a perspective view, (b) is a side view, and (c) is a sectional view of (a).

Fig. 3 is a perspective view showing another example of a kneading machine member of the present disclosure.

Fig. 4(a) is a schematic diagram of a cross section perpendicular to the axial direction, and Fig. 4(b) is a schematic diagram of a cross section including the axis, inside a cylinder used in a kneading machine of the present disclosure.

Fig. 5(a) is a main part enlarged view of a kneading machine member of Fig. 1, and Fig. 5(b) shows a state in which a key is inserted into the kneading machine member of Fig. 5(a).

Fig. 6(a) is a main part enlarged view showing another example of a kneading machine member of the present disclosure, and Fig. 6(b) shows a state in which a key is inserted into the kneading machine member of Fig. 6(a).

Fig. 7(a) is a main part enlarged view showing another example of a kneading machine member of the present disclosure, and Fig. 7(b) shows a state in which a key is inserted into the kneading machine member of Fig. 7(a).

Fig. 8 shows an example of a bearing unit of the present disclosure, where (a) is a front view, (b) is a sectional view at AA' line showing a state in which a side plate is mounted on the bearing unit of (a), and (c) is a front view showing a state in which a side plate is mounted on the bearing unit of (a).

Fig. 9 shows another example of a bearing unit of the present disclosure, where (a) is a front view, (b) is a sectional view at BB' line showing a state in which a side plate is mounted on the bearing unit of (a), and (c) is a front view showing a state in which a side plate is mounted on the bearing unit of (a).

EMBODIMENTS

Hereinafter, the present invention is explained with reference to the accompanying drawings. The following embodiment is one Example that embodies the present invention and is not intended to limit the technical scope of the present invention.

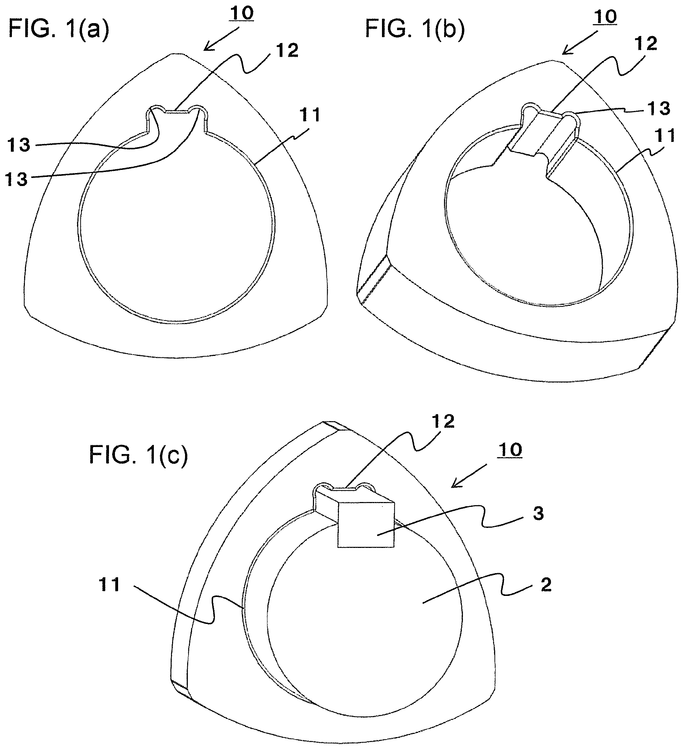

Fig. 1 shows an example of a kneading machine member if a rotating member of the present disclosure is used as a kneading machine member, where (a) is a front view, (b) is a perspective view, and(c) is a perspective view showing a state in which a shaft is inserted into the kneading machine member.

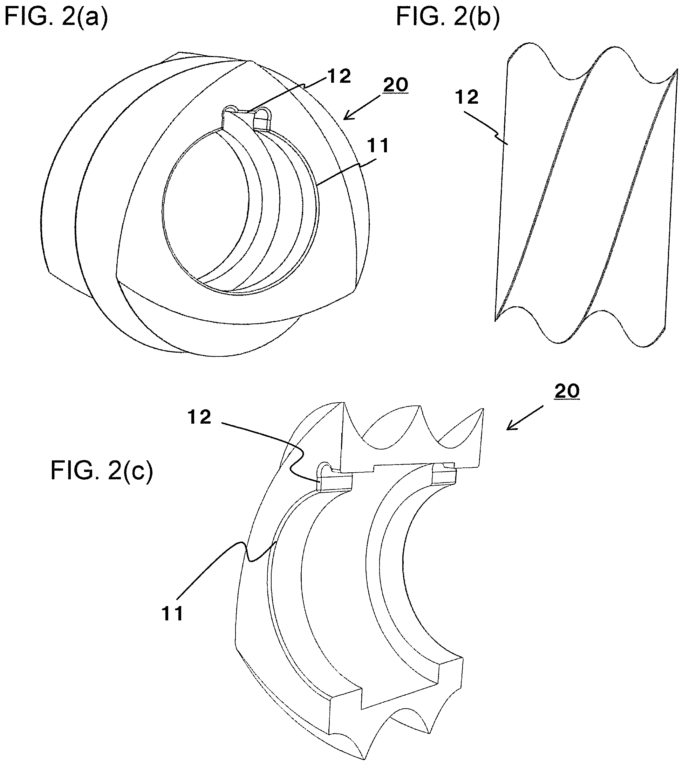

Fig. 2 shows another example of a kneading machine member if a rotating member of the present disclosure is used as a kneading machine member, where (a) is a perspective view, (b) is a side view, and (c) is a sectional view of (a).

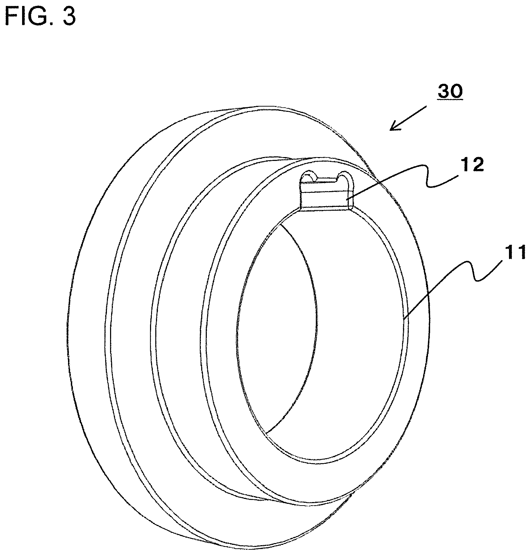

Fig. 3 is a perspective view showing another example of a kneading machine member if a rotating member is used as a kneading machine member.

The kneading machine member shown in Fig. 1 is a shear paddle 10 mounted on a rotating shaft 2, having a substantially triangular-shaped cross section perpendicular to the shaft 2, and used to efficiently knead a mixture (paste).

The kneading machine member shown in Fig. 2 is a screw 20 including a helical triple thread mounted to a rotating shaft 2 and used to send a mixture from the supply direction toward the discharge direction. The screw 20 shown in Fig. 2 is a shape with a triple thread, but it may also be a shape with a double thread. The outer periphery of the screw 20 may also be opposite from the direction of the helix shown in Fig. 2. In that case, the mixture can be returned from the discharge direction to the supply direction. The direction of the helix can be opposite depending on the direction of rotation of the shaft 2.

Then, the kneading machine member shown in Fig. 3 is a resistance paddle 30 mounted on a rotating shaft 2 and has a flange shape. This shape blocks a kneading space of a cylinder 1 and acts as a resistance to the progress of the mixture, which can control the moving speed of the mixture in the cylinder 1.

In any case, the shaft 2 is made of metal.

Kneading machine members 10, 20, and 30 of the present disclosure mainly include ceramics and include a first through-hole 11 into which a shaft 2 is inserted and a second through-hole 12 into which a key 3 protruding from the outer peripheral surface of the shaft 2 is inserted, in which the second through-hole 12 is a polygonal shape if viewed in the axial direction of the first through-hole 11 and includes a notch part 13 extending along the axial direction at at least one corner.

By including the notch part 13, it is possible to provide a space that is not in contact with the key 3. This space can decrease stress concentration received from the vicinity of an edge part of the key 3, relieve the load of tensile stress in a stress part of the second through-hole 12 which serves as a key groove in torque transmission from the shaft 2, and reduce the risk of damage.

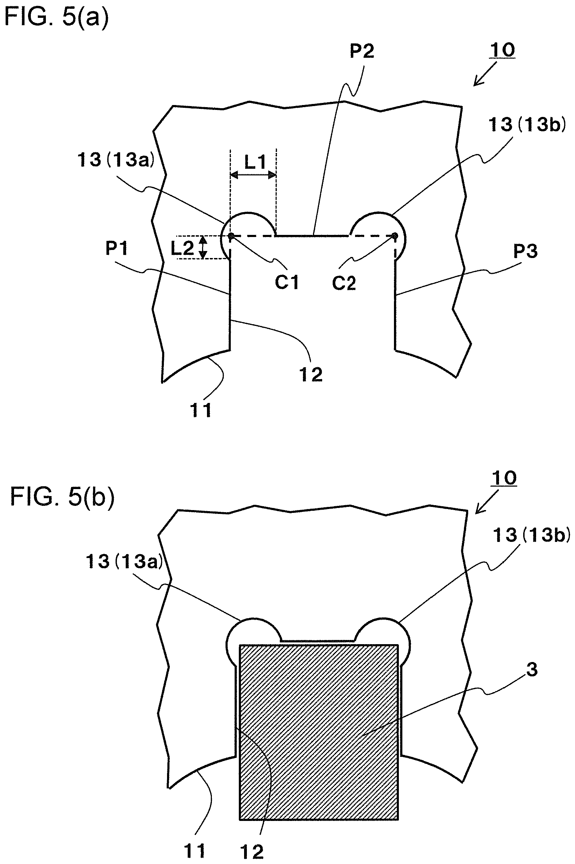

Fig. 5(a) shows a main part enlarged view of a kneading machine member 10 in Fig. 1. As shown in Fig. 5(a), the second through-hole 12 includes multiple planes P1 to P3 parallel to the axis of the first through-hole 11. By these planes, the second through-hole 12 has a quadrangle shape if viewed in the axial direction of the first through-hole 11. The second through-hole 12 is not limited to such a quadrangle shape but may be any other polygonal shape such as a pentagonal or hexagonal shape.

In addition, the kneading machine member 10 includes the notch parts 13 (13a, 13b) that connect with the second through-hole 12 at a corner where adjacent planes intersect with each other. In. Fig. 5(a), a notch part 13a is located at a corner where a plane P1 intersects with a plane P2, and a notch part 13b is located at a corner where a plane P2 intersects with a plane P3.

In the kneading machine member 10, the notch part 13a is located so as to notch both the adjacent plane P1 and plane P2. In other words, in Fig. 5(a), a part where the adjacent plane P1 and plane P2 intersect is an intersection part C1, but an end part of the plane P1 and an end part of the plane P2 are both notched by the notch part 13a. Similarly, the notch part 13b is located so as to notch both the adjacent plane P3 and plane P2. That is, in Fig. 5(a), a part where the adjacent plane P3 and plane P2 intersect is an intersection part C2, but an end part of the plane P3 and the end part of the plane P2 are both notched by the notch part 13b.

By this structure, the stress concentration received from the key 3 can be reduced more effectively. That is, as shown in Fig. 5(b), when the key 3 is inserted into the second through-hole 12, the space is located so as to surround a corner of the key 3 where stress concentration tends to occur, and the damage to the kneading machine member 10 can be further reduced.

As shown in Fig. 5(a), the notch part 13a may include a width L1 starting at the intersection part C1 in the plane P2 that is larger than a width L2 starting at the intersection part C1 in the plane P1. In this case, the stress applied to the kneading machine member 10 can be reduced, and torque can be efficiently applied to the kneading machine member 10 from the key 3. In other words, since a large amount of torque is applied from the side surface of the key 3 when the kneading machine member 10 rotates, torque can be efficiently applied to the kneading machine member 10 by increasing a contact area between the side surface of the key 3 and the plane P1. In addition, by increasing a space region between a tip surface of the key 3 and the plane P2, stress concentration can also be reduced. Similar to the above for the notch part 13b, a width starting at the intersection part C2 in the plane P2 may be larger than a width starting at the intersection part C2 in the plane P3.

For the notch part 13a, the above width L1 may be twice or more and three times or less than the width L2. The above width L1 may also be 0.25 times or more and 0.35 times or less than a width of the second through-hole 12 (a distance between the plane P1 and the plane P3). The notch part 13b may also have a similar relationship as above.

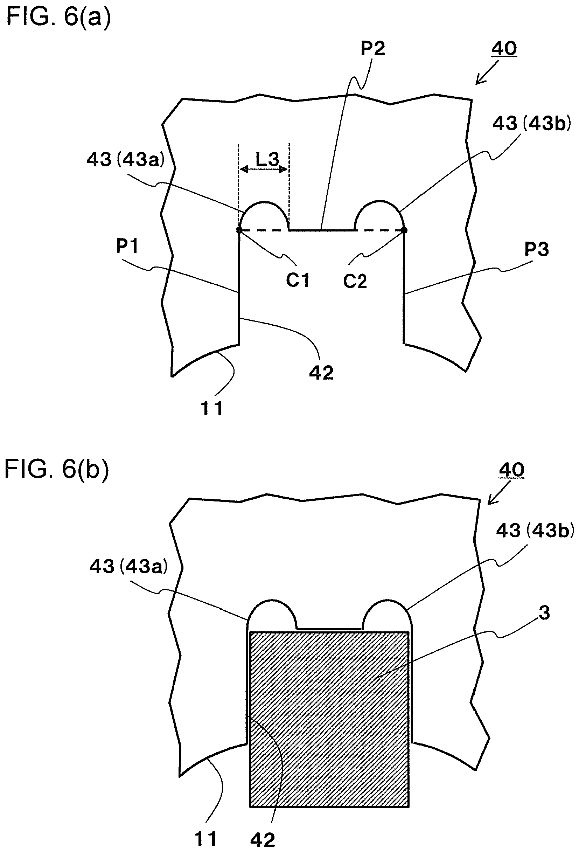

In addition, as another example of a kneading machine member if the rotating member of the present disclosure is used as a kneading machine member, a kneading machine member 40 shown in Fig. 6(a) may be used. The kneading machine member 40 is different from the kneading machine member 10 in the disposition of notch parts 43 (43a, 43b) in a second through-hole 42. A notch part 43a includes the intersection part C1 and is located so as to notch only the plane P2 out of the adjacent plane P1 and plane P2. In other words, in Fig. 6 (a), a part where the adjacent plane P1 and plane P2 intersect is the intersection part C1, but only the end part of the plane P2 is notched by the notch part 43a. Similarly, a notch part 43b includes the intersection C2 and is located so as to notch only the plane P2 out of the adjacent plane P3 and plane P2. That is, in Fig. 6(a), a part where the adjacent plane P3 and plane P2 intersect is the intersection part C2, but only the end part of the plane P2 is notched by the notch part 43b.

Fig. 6(b) shows a state when the key 3 is inserted into the second through-hole 42 of the kneading machine member 40. In Fig. 6(b), a space is located between the kneading machine member 40 and a part of the tip surface of the key 3, and a contact area of the side surface of the key 3 with the plane P1 and a contact area with the plane P3 are larger than the kneading machine member 10. By this structure, torque from the key 3 can be more efficiently applied to the kneading machine member 10 while reducing stress concentration received from the key 3.

For the notch part 43a, a width L3 (that is, a width of the notch part 43a) starting at the intersection part C1 in the plane P2 may be 0.25 times or more and 0.35 times or less than a width of the second through-hole 42 (a distance between the plane P1 and the plane P3). The notch part 43b may also have a similar relationship as above.

In the case that only the plane P2 includes notches as shown in Fig. 6, the notches can be formed accurately by cutting. In order to reduce play during rotation of the shaft 2, it is important to make a smaller fitting between the second through hole 42 and the key 3. For this purpose, it is effective to perform the grinding process of the second through-hole 42 with a diamond tool using a machining center or the like, however, in order to obtain the notch parts 43 with a small width, the diameter of a grinding wheel part of the diamond tool must be small, and a shank that holds the grinding wheel part must be even smaller in diameter than the grinding wheel part. In such a case, the rigidity of the diamond tool becomes low, and processing becomes difficult. If the kneading machine member 40 is made of a difficult-to-cut material such as a zirconia ceramics, the processing resistance is high, and the diamond tool escapes, which makes it impossible to finish with the targeted processing accuracy and requires a great deal of processing time. However, if the width of the notch parts 43 is 0.25 times or more than the width of the second through-hole 42, the diamond tool that forms the second through-hole 42 can be selected with a larger outer diameter for both the grinding wheel part and the shank, and the rigidity of the diamond tool becomes higher. Therefore, it is possible to shorten the processing time. On the other hand, if the width of the notch parts 43 is 0.35 times or less than the width of the second through-hole 42, the contact area of the key 3 to the inner surface of the second through-hole 42 increases, and play during rotation of the shaft 2 can be reduced.

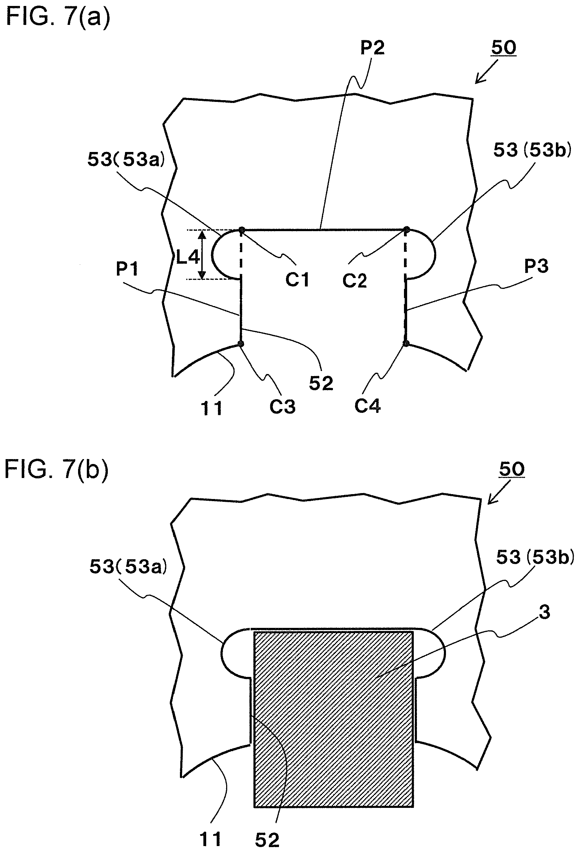

As another example of a kneading machine member if the rotating member of the present disclosure is used as a kneading machine member, a kneading machine member 50 shown in Fig. 7(a) may be used. The kneading machine member 50 is different from the kneading machine member 10 in the disposition of notch parts 53 (53a, 53b) in a second through-hole 52. A notch part 53a includes the intersection C1 and is located so as to notch only the plane P1 out of the adjacent plane P1 and plane P2. This means that, in Fig. 7 (a), a part where the adjacent plane P1 and plane P2 intersect is the intersection C1, but only the end part of the plane P1 is notched by the notch part 53a. Similarly, a notch part 53b includes the intersection C2 and is located so as to notch only the plane P3 out of the adjacent plane P3 and plane P2. That is, in Fig. 7(a), a part where the adjacent plane P3 and plane P2 intersect is the intersection C2, but only an end part of the plane P3 is notched by the notch part 53b.

Fig. 7(b) shows a state when the key 3 is inserted into the second through-hole 52 of the kneading machine member 50. In Fig. 7 (b), a space is located between the kneading machine member 50 and a part of the side surface of the key 3, and a contact area of the tip surface of the key 3 with the plane P2 is larger than the kneading machine member 10. By this structure, it is possible to further improve the fitting between the second through-hole 52 and the key 3 and reduce play during rotation of the shaft 2 while reducing stress concentration received from the key 3.

For the notch part 53a, a width L4 (that is, a width of the notch part 53a) starting at the intersection part Cl in the plane P1 may be 0.25 times or more and 0.35 times or less than a depth of the second through-hole 52 (a distance from the intersection part C3 of the plane P1 and the first through-hole 11 to the intersection part Cl). The notch part 53b may also have a similar relationship as above.

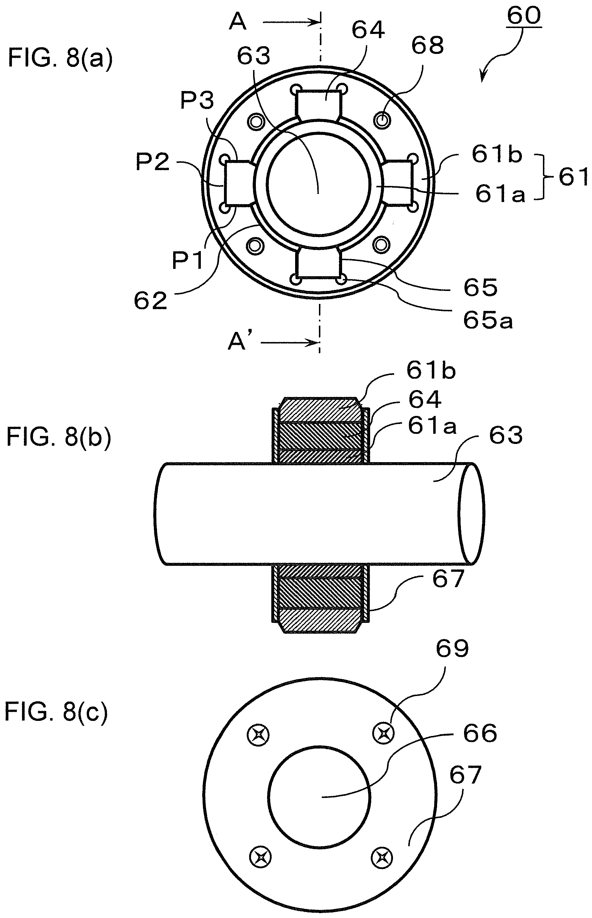

Fig. 8 shows an example of the bearing unit of the present disclosure, where (a) is a front view, (b) is a sectional view at AA' line showing a state in which the side plate is mounted on the bearing unit of (a), and (c) is a front view showing a state in which the side plate is mounted on the bearing unit of (a).

The bearing unit shown in Fig. 8 is a bearing unit 60 that includes a bearing 61, a shaft 63, and a solid lubricant 64.

The bearing unit 61 includes an outer ring 61b and an inner ring 61a. The outer ring 61b is composed of the rotating member of the present disclosure, and a similar structure to the rotating member used as a kneading machine member described above is used. The inner ring 61a is located in a first through-hole 62 and is composed of an annular body coaxial with the first through-hole 62. The inner ring 61a is supported by the outer ring 61b through the solid lubricant 64 and is rotatable with respect to the outer ring 61b. As the material of the inner ring 61a, ceramics, metal, or the like are used.

The shaft 63 is inserted into the inner ring 61a and rotates with the inner ring 61a.

The solid lubricant 64, for example, is made of a rectangular-shaped woody porous carbon material and is inserted into a second through-hole 65, indirectly sliding contact with the outer peripheral surface of the shaft 63 through the inner ring 61a.

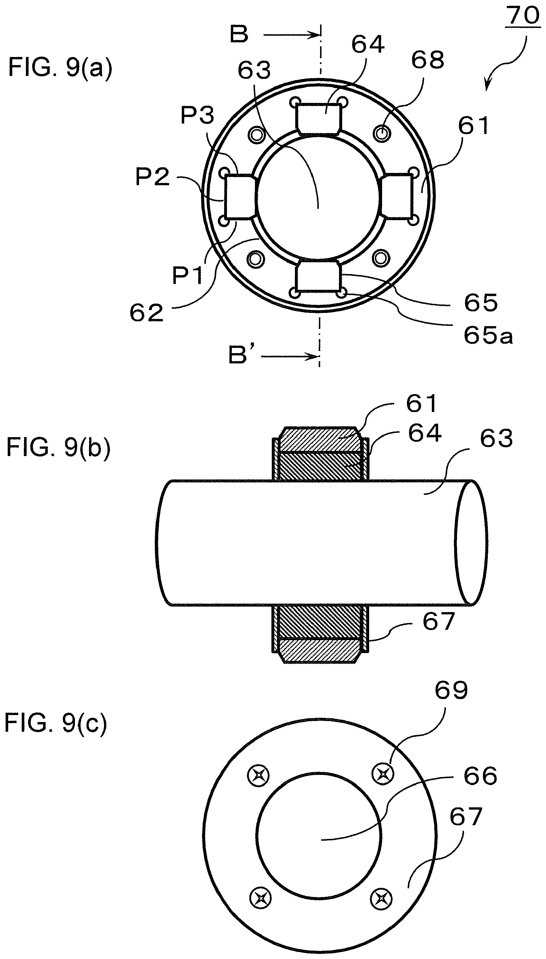

Fig. 9 shows another example of the bearing unit of the present disclosure, where (a) is a front view, (b) is a sectional view at BB' line showing a state in which the side plate is mounted on the bearing unit of (a), and (c) is a front view showing a state in which the side plate is mounted on the bearing unit of (a).

The bearing unit shown in Fig. 9 is a bearing unit 70 that includes the bearing 61 composed of the rotating member of the present disclosure, the shaft 63 inserted into the first through-hole 62, and the solid lubricant 64 in direct sliding contact with the outer peripheral surface of the shaft 63 inserted into the first through-hole 62. The solid lubricant 64, for example, is made of the rectangular-shaped woody porous carbon material and is inserted into the second through-hole 65, directly sliding contact with the outer peripheral surface of the shaft 63.

In both the bearing units 60 and 70, the second through-hole 65 is polygonal shape if viewed in the axial direction of the first through-hole 62 and includes a notch part 65a extending along the axial direction at at least one corner. In addition, the second through-hole 65 is disposed at equal intervals every 90 degrees along the circumferential direction.

An annular side plate 67 including an insertion hole 66 to pass the shaft 63 through is fixed to both sides of the bearing 61 by inserting screws 69 into screw holes 68 of the bearing 61. By fixing the side plate 67, the movement of an inner ring 63a in the axial direction due to lateral swing and the intrusion of foreign substances into a gap between the inner ring 63a or the shaft 63 and the solid lubricant 64 are suppressed, and therefore, the smoothness of rotation can be maintained over a long period of time.

By including the notch part 65a, both the bearing units 60 and 70 can provide a space that is not in contact with the solid lubricant 64. This space can decrease the stress concentration received from the vicinity of an edge part of the solid lubricant 64, relieve the load of tensile stress in the stress part of the second through-hole 65 in torque transmission from the shaft 63, and reduce the risk of damage.

The ceramics used in each of the rotating members (including the kneading machine members and the bearings) described above are, for example, ceramics composed mainly of at least any of zirconia, silicon nitride, sialon, silicon carbide, alumina, and ZTA (zirconia-toughened alumina).

The main component in ceramics means the component that accounts for 80% by mass or more out of 100% by mass of all components that compose the ceramics.

The components of ceramics are first identified by checking the results, which are obtained by measurement using an X-ray diffractometer (XRD), against the JCPDS card. Next, it is the main component if the content, which is determined by converting it into the identified compound from the value obtained by measurement using an X-ray fluorescence analyzer (XRF) or an ICP (Inductively Coupled Plasma) emission spectrometer (ICP), is 80% by mass or more. Specifically, the ceramics is mainly composed of zirconia if it is confirmed that $ZrO_2$ is included from the measurement by XRD, and the value (content) that converts the value of Zr obtained by ICP into $ZrO_2$ is 80% by mass or more.

The ceramics whose main component is zirconia may also contain, for example, silicon oxide and aluminum oxide as components other than the main component. The ceramics whose main component is silicon nitride or sialon may contain, for example, at least one of aluminum oxide and rare earth metal oxide as a component other than the main component. The ceramics whose main component is alumina may contain, for example, at least one of silicon oxide, calcium oxide, and magnesium oxide as a component other than the main component.

In addition, a rotating member that mainly includes ceramics refers to a rotating member in which the ceramics accounts for 90% by mass or more out of 100% by mass of all components that compose the rotating member, and an amorphous hard carbon film may be formed on any surface of the rotating member.

In the kneading machine members 10, 20, and 30 of the present disclosure, the inner surface of the notch part 13 may include a larger cutting level difference (Rδc) in a roughness curve, which represents the difference between the cutting level at 25% of the load length ratio in the roughness curve and the cutting level at 75% of the load length ratio in the roughness curve, than the inner surface inscribed in the key 3.

Similarly, in the bearings 60 and 70 of the present disclosure, the inner surface of the notch part 65a may include a larger cutting level difference (Rδc) in the roughness curve, which represents the difference between the cutting level at 25% of the load length ratio in the roughness curve and the cutting level at 75% of the load length ratio in the roughness curve, than the inner surface inscribed in the solid lubricant 64.

To make such a structure, the notch parts 13 and 65a are not grounded with the diamond tool but formed by cutting in the pre-sintering stage. In that case, the cutting level difference (Rδc) of the inner surfaces of the notch parts 13 and 65a is larger than the cutting level difference (R5c) of the inner surfaces inscribed respectively in the key 3 and the solid lubricant 64. The inner surfaces of the notch parts 13 and 65a have fewer microcracks due to the grinding process, making it more difficult to break even when stress is concentrated.

In the kneading machine members 10, 20, and 30 of the present disclosure, the arithmetic mean roughness (Ra) of the inner surface of the notch part 13 may be larger than the arithmetic mean roughness (Ra) of the inner surface inscribed in the key 3.

Similarly, in the bearings 40 and 50 of the present disclosure, the arithmetic mean roughness (Ra) of the inner surface of the notch part 65a may be larger than the arithmetic mean roughness (Ra) of the inner surface inscribed in the solid lubricant 64. To make such a structure, the notch parts 13 and 65a are not ground with the diamond tool but are formed by cutting in the pre-sintering stage. In that case, the arithmetic mean roughness (Ra) of the inner surfaces of the notch parts 13 and 65a is larger than the arithmetic mean roughness (Ra) of the inner surfaces inscribed in the key 3 and the solid lubricant 64, respectively. The inner surfaces of the notch parts 13 and 65a have fewer microcracks due to the grinding process, making it more difficult to break when stress is concentrated. For example, the arithmetic mean roughness (Ra) of the inner surfaces of the notch parts 13 and 65a is set to 3.2 μm or more and 6.3 μm or less, and the arithmetic mean roughness (Ra) of the inner surface inscribed in the key 3 or the solid lubricant 64 is set to 0.8 μm or more and 1.6 μm or less. It is suitable for the inscribed inner surface of the key 3 to have a low arithmetic mean roughness (Ra) value in order to avoid damaging the key 3 when it is inserted into the second through-hole 12. For the inner surface inscribed in the solid lubricant 64, it is also suitable to have a similarly low arithmetic mean roughness (Ra) value.

Each of the cutting level difference (Rδc) and the arithmetic mean roughness (Ra) of the inner surfaces of the notch parts 13 and 65a and the inner surfaces inscribed respectively in the key 3 and the solid lubricant 64 can be measured using a surface roughness measuring instrument (Surfcorder (SE500A or its successor model) manufactured by Kosaka Laboratory Ltd.) in accordance with JIS B 0601-1982. For the measurement conditions, the radius of the probe may be 5 μm, the material of the probe may be diamond, the measurement length may be 2.5 mm (in the axial direction of the first through-holes 11 and 62), the cutoff value may be 0.8 mm, and the scanning speed may be 0.1 mm per second.

The inner surface where the key 3 or the solid lubricant 64 is inscribed includes a first side surface P1 and a second side surface P3 opposed to each other across the second through-holes 12, 42, 52, 65 and the upper surface P2 which connects the first side surface P1 and the second side surface P3, and the maximum grain size of the crystal grains on the first side surface P1 and the second side surface P3 may be smaller than the maximum grain size of the crystal grains on the upper surface P2.

With this structure, the crystal grains in the vicinity of the first side surface P1 and the second side surface P3, which are located in the vicinity of the shafts 2 and 63, have a higher compressive stress between them than the crystal grains in the vicinity of the upper surface P2, so that even if the key 3 and the solid lubricant 64 are repeatedly detached, it is possible to suppress de-graining from the vicinity of the first side surface P1 and the second side surface P3 and prevent damage to the shafts 2 and 63.

The difference between the maximum grain size of the crystal grains on the first side surface P1 and the second side surface P3 and the maximum grain size of the crystal grains on the upper surface P2 may be 0.2 μm or more.

If the difference from the maximum grain size of the crystal grains is in this range, damage to the shafts 2 and 63 can be further suppressed. For the measurement of the maximum grain size of the crystal grains on the first side surface P1, the second side surface P3, and the upper surface P2, the surface to be measured is first heat-treated at a temperature 50°C to 100°C lower than the sintering temperature until the crystal grains can be distinguished from the grain boundary layers. The heat treatment is performed for approximately 30 minutes, for example. If the ceramics that composes the rotating member is a zirconia ceramics, the temperature of the heat treatment is, for example, 1300°C to 1650°C.

Then, the heat-treated surface is photographed using a scanning electron microscope (SEM) with a magnification of 10000x, and the range to be measured is set to, for example, a length of 12 μm in the horizontal direction and a length of 9 μm in the vertical direction. Next, the maximum grain size can be obtained by setting the measurement range from the captured image and analyzing it using an image analysis software (for example, Win ROOF manufactured by Mitani Corporation). For the analysis, the threshold of the grain size is set to 0.21 μm, and a grain size of less than 0.21 μm is not included in the calculation of the maximum grain size.

The ceramics may also be the zirconia ceramics. The zirconia ceramics refers to ceramics composed mainly of zirconia, and if the rotating member is a kneading machine member made of the zirconia ceramics, for example, if it is a paste (mixture) used to form the positive electrode of a lithium-ion battery, an alkaline solvent is used as the solvent, but it can be made into a kneading machine member that has high corrosion resistance due to the absence of a liquid phase that becomes glassy and is difficult to break due to its high mechanical strength. Furthermore, by using the zirconia ceramics, it is possible to reduce the difference in the thermal expansion coefficient from a shaft made of metal, thus reducing the effect of heat. Because the zirconia ceramics has low rigidity, it is effective in relieving stress by slightly deforming against a slurry pressure generated by kneading.

In addition, the zirconia ceramics may contain 2 to 5 mol% of yttria. If the zirconia ceramics contains 2 to 5 mol% of yttria, it becomes a stable zirconia ceramics, which can increase the mechanical strength and make it difficult to break. It is also possible to obtain the rotating members 10, 20, 30, 40, 50, 60, and 70 that are difficult to chip.

The zirconia ceramics may also contain 10 to 40 mol% of a monoclinic zirconia crystal. It suppresses the transformation of the crystal phase at a high temperature, and the slurry can be handled even at a high temperature of 100°C or higher. If the ratio of the monoclinic zirconia crystal is within the above range, the zirconia ceramics is less likely to undergo a phase transformation when heat is supplied, and the volume change caused by this phase transformation is less likely to occur, so mechanical properties such as the strength of the rotating members 10, 20, 30, 40, 50, 60, 70 are less likely to deteriorate even after repeated heating and cooling.

The ratio of the monoclinic zirconia crystal in the zirconia ceramics can be indicated as the monoclinic ratio. The monoclinic ratio X may be calculated from the area of each peak intensity I of the zirconia crystals obtained from the measurement results by X-ray diffractometer using the following formula.

$$X = (Im\ (111) + Im\ (11\text{-}1))\ /\ (Im\ (111) + Im\ (11\text{-}1) + It\ (111) + Ic\ (111))$$

In this case, Im (111) is a peak intensity of a monoclinic (111) plane, Im (11-1) is a peak intensity of a monoclinic (11-1) plane, It (111) is a peak intensity of a tetragonal (111) plane, and Ic (111) is a peak intensity of a cubic (111) plane.

Then, as shown in Fig. 2(c), a part of the inner surface of the first through-hole 11 may include a central part in the axial direction that is more depressed than the vicinity of an opening. By using a bridge structure, in which the central part is more depressed than the vicinity of the opening, the area in contact with the side surface of the long key 3 can be reduced, so that distortions during rotation of the shaft 2 can be absorbed by the depressed central part, which reduces the risk of damage. In addition, a part of the second through-hole 12 to be processed can be made smaller, which can reduce costs.

The kneading machine of the present disclosure includes any of the above-described kneading machine members 10, 20, 30, 40, and 50, the shaft 2 inserted into the first through-hole 11, and the key 3 protruding from the outer peripheral surface of the shaft 2 and inserted into the second through-hole 12. The kneading machine of the present disclosure can be used for a long period of time because the kneading machine member having less risk of being damaged is used in this way. Similarly, the bearing units 60 and 70 of the present disclosure include any of the above-described bearings 61, the shaft 63 inserted into the first through-hole 62, and the solid lubricant 64 in sliding contact with the shaft 63 or the inner ring 61a supporting the shaft 63. The bearing unit of the present disclosure can be used for a long period of time because the bearing having less risk of being damaged is used in this way.

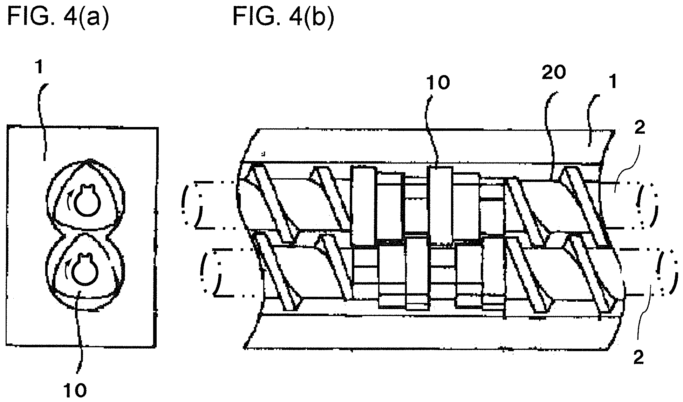

Fig. 4 is a schematic diagram of the inside of the cylinder used in the kneading machine of the present disclosure, where (a) is a cross section perpendicular to the axial direction and (b) is a cross section including the axis.

The kneading machine 40 shown in Fig. 4 includes the cylinder 1 providing a kneading space for the mixture, the two shafts 2 disposed in parallel in the cylinder 1, the shear paddles 10 for kneading the mixture around the shaft 2, and a screw 20 for feeding the mixture from the supply direction to the discharge direction, and a minute gap is set between the inner peripheral surface of the cylinder 1 and the outer peripheral surface of the shear paddles 10. The precursor of the mixture is supplied from one end of the cylinder 1, heated by a heater (not shown) to be a molten state, kneaded by rotation of the shear paddles 10, and discharged from the other end of the cylinder 1 by rotation of the screw 20. In this way, the kneading machine 40 where a plurality of the shafts 2 is disposed in parallel can efficiently knead the mixture by the shear paddles 10 which are rotatably provided adjacent to each other.

In addition, a heater and a water-cooling jacket (both not shown) are provided in the cylinder 1 in a beltlike form along the axial direction, and the cylinder 1 and the shear paddles 10 can be maintained at a temperature suitable for kneading by repeating the on and off control. The two shafts 2 are controlled to rotate in the same direction but may be rotated in the opposite direction by changing the pitch shape of the screw 20.

The shear paddles 10 are constituted in combination and always rotating out of phase so as to rub, with one edge part in close proximity to the other.

Next, an example of the manufacturing method for the rotating member of the present disclosure is explained.

If the rotating member is made of the zirconia ceramics, first, zirconia powder which is the main component, magnesia powder as a stabilizer, dispersant to disperse zirconia powder if necessary, and binder such as polyvinyl alcohol are wet-mixed for 40 to 50 hours by a barrel mill, rotation mill, vibration mill, bead mill, sand mill, and agitator mill to make the slurry.

The average grain size ($D_{50}$) of the zirconia powder is 0.1 $\mu$m or more and 2.2 $\mu$m or less, and the content of the magnesia powder in the total 100% by mass of the above powders is 2.0% by mass or more and 4.0% by mass or less.

If the rotating member is made of the zirconia ceramics containing 2 to 5 mol% of yttria, the magnesia powder may be substituted for the yttria powder. The content of the yttria powder in the total 100% by mass of the zirconia powder and the yttria powder is 3.6% by mass or more and 8.8% by mass or less.

Next, organic binders such as paraffin wax, PVA (polyvinyl alcohol), and PEG (polyethylene glycol) are weighed in predetermined amounts and added to the slurry. In addition, a thickening stabilizer, dispersant, pH adjuster, defoaming agent, and the like may be added.

The slurry is then spray dried to obtain granules. Next, it is molded using a hydrostatic pressure device or a uniaxial pressure device, and the molding pressure is set to 80 MPa or more and 200 MPa or less, for example, to obtain a ring-shaped or cylindrical molded body. The molded body is then cut and finished into a near net shape. Then, a sintered body can be obtained by keeping the sintering temperature at 1400°C or higher and 1700°C or lower, preferably 1600°C or higher and 1700°C or lower, for 1 hour or more and 3 hours or less. Then, by applying the grinding process to the sintered body as necessary, the rotating members shown in Figs. 1 to 9 can be obtained.

If obtaining the rotating member that mainly includes the zirconia ceramics including 10 to 40 mol% of the monoclinic zirconia crystal, first, the content of the magnesia powder in the total 100 % by mass of the zirconia powder and the magnesia powder is set to 3.0 % by mass or more and 3.8 % by mass to obtain the molded body by the method described above. Then, the molded body may be held at the sintering temperature of 1600°C or higher and 1700°C or lower for 1 hour or more and 3 hours or less and cooled at the temperature drop rate of 80°C or higher and 150°C or lower per hour.

It is possible to increase the mechanical strength of the rotating members such as the kneading machine members and the bearings obtained by the manufacturing method described above. Therefore, the kneading machine including the kneading machine member, the shaft inserted into the first through-hole, and the key protruding from the outer peripheral surface of the shaft and inserted into the second through-hole can be used for a long period of time because it uses a kneading machine member that is less likely to be damaged. Similarly, the bearing unit that includes the bearing, the shaft inserted into the first through-hole, and the solid lubricant inserted into the second through-hole and in direct or indirect sliding contact with the outer peripheral surface of the shaft can be used for a long period of time because it uses a bearing that is less likely to be damaged.

DESCRIPTION OF THE REFERENCE NUMERALS

1 Cylinder
2 Shaft

3 Key
10, 40, 50 Kneading Machine Member (Shear Paddle)
11 First Through-Hole
12, 42, 52 Second Through-Hole
13 Notch Part
20 Kneading Machine Member (Screw)
30 Kneading Machine Member (Resistance Paddle)
60 Bearing Unit
61 Bearing
62 First Through-Hole
63 Shaft
64 Solid Lubricant
65 Second Through-Hole
65a Notch Part
66 Insertion Hole
67 Side Plate
68 Screw Hole
69 Screw
70 Bearing Unit

**Claims**

1. A rotating member, which mainly comprises ceramics and comprising:

   a first through-hole into which a shaft is inserted; and
   a second through-hole into which a key protruding from an outer peripheral surface of the shaft or a solid lubricant in direct or indirect sliding contact with the outer peripheral surface of the shaft is inserted,
   wherein the second through-hole is a polygonal shape if viewed in an axial direction of the first through-hole and comprises a notch part extending along the axial direction at at least one corner.

2. A rotating member according to claim 1, wherein an inner surface of the notch part comprises a larger cutting level difference (R5c) in a roughness curve, which represents the difference between a cutting level at 25% of the load length ratio in the roughness curve and the cutting level at 75% of the load length ratio in the roughness curve, than an inner surface inscribed in the key or the solid lubricant.

3. A rotating member according to claim 1 or 2, wherein an arithmetic mean roughness (Ra) of an inner surface of the notch part is larger than an arithmetic mean roughness (Ra) of an inner surface where the key or the solid lubricant is inscribed.

4. A rotating member according to any one of claims 1 to 3, wherein an inner surface of the second through-hole where the key or the solid lubricant is inscribed comprises a first side surface and a second side surface opposed to each other across the second through-hole, and an upper surface which connects the first side surface and the second side surface, and a maximum grain size of crystal grains on the first side surface and the second side surface is smaller than a maximum grain size of crystal grains on the upper surface.

5. A rotating member according to claim 4, wherein a difference between the maximum grain size of crystal grains on the first side surface and the second side surface and the maximum grain size of crystal grains on the upper surface is 0.2 $\mu$m or more.

6. A rotating member according to any one of claims 1 to 5, wherein the ceramics is a zirconia ceramics.

7. A rotating member according to claim 6, wherein the ceramics comprises 2 to 5 mol% of yttria.

8. A rotating member according to claim 6, wherein the ceramics comprises 10 to 40 mol% of a monoclinic zirconia crystal.

9. A rotating member according to any one of claims 1 to 8, wherein a part of an inner surface of the first through-hole comprises a central part in the axial direction that is more depressed than a vicinity of an opening.

10. A kneading machine member, which is composed of the rotating member according to any one of claims 1 to 9.

11. A kneading machine, comprising:

the kneading machine member according to claim 10;
a shaft inserted into the first through-hole; and
a key protruding from the outer peripheral surface of the shaft and inserted into the second through-hole.

12. A bearing, which is composed of the rotating member according to any one of claims 1 to 9.

13. A bearing, comprising:

an outer ring which is composed of the rotating member according to any one of claims 1 to 9; and
an inner ring which is located in the first through-hole, is composed of an annular body coaxial with the first through-hole, and is rotatable with respect to the outer ring.

14. A bearing unit, comprising:

the bearing according to claim 12;
a shaft inserted into the first through-hole; and
a solid lubricant inserted into the second through-hole and sliding contact with the shaft.

15. A bearing unit, comprising:

the bearing according to claim 13;
a shaft inserted into the inner ring; and
a solid lubricant inserted into the second through-hole and sliding contact with the inner ring.

FIG. 1(a)

10

12

13

13

11

FIG. 1(b)

10

12

13

11

FIG. 1(c)

12

10

3

2

11

FIG. 2(a)

12

20

11

FIG. 2(b)

12

20

FIG. 2(c)

12

11

FIG. 3

FIG. 4(a)    FIG. 4(b)

FIG. 5(a)

FIG. 5(b)

FIG. 6(a)

FIG. 6(b)

FIG. 7(a)

FIG. 7(b)

FIG. 8(a)

A

63 P3 64 68 60

P2 61b 61a 61

P1 62 65 65a

A'

FIG. 8(b)

61b 64 61a 63

67

FIG. 8(c)

69 66 67

FIG. 9(a)

FIG. 9(b)

FIG. 9(c)

## INTERNATIONAL SEARCH REPORT

| International application No. |
| --- |
| PCT/JP2019/033525 |

**A.   CLASSIFICATION OF SUBJECT MATTER**
Int.Cl.   B01F15/00(2006.01)i,    B01F7/04(2006.01)i,    B01F7/08(2006.01)i,
          B28C1/02(2006.01)i, H01M4/139(2010.01)n

According to International Patent Classification (IPC) or to both national classification and IPC

**B.   FIELDS SEARCHED**

Minimum documentation searched (classification system followed by classification symbols)
Int.Cl.   B01F15/00, B01F7/04, B01F7/08, B28C1/02, H01M4/139

| Documentation searched other than minimum documentation to the extent that such documents are included in the fields searched | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
| --- | --- | --- |
| X<br>A | JP 7-52150 A (APV CHEMICAL MACHINERY INC.) 28 February 1995, paragraphs [0013]-[0022], fig. 1-7 & US 5304000 A, column 3, line 32 to column 5, line 63, fig. 1-7 & EP 637696 A1 | 1, 6, 10-12<br>2-5, 7-9, 13-15 |
| A | JP 2000-280324 A (KURIMOTO, LTD.) 10 October 2000, entire text, all drawings (Family: none) | 1-15 |
| A | JP 2000-279779 A (KURIMOTO, LTD.) 10 October 2000, entire text, all drawings (Family: none) | 1-15 |

☒   Further documents are listed in the continuation of Box C.        ☐   See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 14 November 2019 (14.11.2019) | 26 November 2019 (26.11.2019) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

International application No.

PCT/JP2019/033525

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 2001-286704 A (SUMITOMO HEAVY INDUSTRIES, LTD.) 16 October 2001, entire text, all drawings (Family: none) | 1-15 |
| A | JP 2007-247849 A (NTN CORPORATION) 27 September 2007, entire text, all drawings (Family: none) | 1-15 |

Form PCT/ISA/210 (continuation of second sheet) (January 2015)

**EP 3 845 302 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012129126 A
- JP H578504 U
- JP H11153138 A